# EUROPÄISCHE PATENTSCHRIFT

(11) **EP 3 526 474 B1**
(45) Veröffentlichungstag und Bekanntmachung des Hinweises auf die Patenterteilung: **07.10.2020**
(21) Anmeldenummer: 17761009.4
(22) Anmeldetag: 31.08.2017
(51) Int. Cl.: F15B 13/04, F15B 11/05, F15B 13/02, F15B 13/01, G05D 7/00

(54) **ABLAUFDRUCKWAAGE UND HUB-SENKVORRICHTUNG MIT EINER SOLCHEN ABLAUFDRUCKWAAGE**
DISCHARGE PRESSURE COMPENSATING VALVE AND LIFTING-LOWERING DEVICE HAVING A PRESSURE COMPENSATING VALVE OF THIS TYPE
BALANCE DE PRESSION D'ÉCOULEMENT ET DISPOSITIF DE LEVAGE-ABAISSEMENT COMPRENANT UNE TELLE BALANCE DE PRESSION D'ÉCOULEMENT

(30) Priorität: 13.10.2016 DE 102016012261
(43) Veröffentlichungstag der Anmeldung: 21.08.2019
(60) Teilanmeldung: 20182901.7
(73) Patentinhaber: Hydac Fluidtechnik GmbH, 66280 Sulzbach/Saar (DE)
(72) Erfinder: HILZENDEGEN, Philipp, 66687 Wadern (DE); BILL, Markus, 66265 Heusweiler (DE); HEß, Maximilian Felix, 661 17 Saarbrücken (DE)
(74) Vertreter: Bartels und Partner, Patentanwälte
(86) Internationale Anmeldenummer: PCT/EP2017/001034
(87) Internationale Veröffentlichungsnummer: WO 2018/068876

(56) Entgegenhaltungen:
- EP-A1- 0 893 607
- EP-A1- 2 551 571
- DE-C1- 3 705 170

## Beschreibung

Die Erfindung betrifft eine Ablaufdruckwaage mit den Merkmalen im Oberbegriff von Anspruch 1.

Bei hydraulischen Steuervorrichtungen mit einem Zweiwege-Stromregler in einer Ablassleitung zum Tank, bei denen der Stromregler eine Messblende und eine Druckwaage mit einem Regelkolben aufweist, dessen Kolbenenden in Steuerkammern mit Steuerdrücken beaufschlagbar sind, lässt sich bei der Betätigung einseitig gegen eine Last beaufschlagbarer Hydromotoren ein Schaltdruck häufig nicht vermeiden, weil der Regelkolben zur Verstellung ein bestimmtes Volumen an Druckmittel verbraucht, oder es sind aufwendige bauliche und schaltungstechnische Maßnahmen nötig, den Schaltruck zu minimieren.

Um den genannten Schaltruck mit baulich geringem Aufwand zu vermeiden, ist bei einer bekannten Lösung nach DE 37 05 170 C1 das dem Lastdruck ausgesetzte Kolbenende des Regelkolbens als Schließelement ausgebildet, das mit einem zugeordneten Ventilsitz als den Lastdruck haltendes Sitzventil wirkt. Ferner ist ein Sperrglied in der Ablassleitung vorgesehen, das den Lastdruck vom Durchgang der Druckwaage fernhält. Bei Aufgabe der Absperrstellung wird der Schaltruck vermieden, weil das Sitzventil in der Druckwaage mit dem Sperrglied die Last ohne Druckmittelverlust hält und wegen des in der Absperrstellung gehaltenen Regelkolbens zum Aufsteuern der Regelblende keine verlorene Druckmittelmenge zu ergänzen ist. Obwohl bei dieser bekannten Lösung ein den Lastdruck haltendes Sitzventil realisiert ist, kommt es dennoch insbesondere über den Lastabgriff der Druckwaage zu einem gewissen Leckagefluss, der die Funktionssicherheit der bekannten Lösung beeinträchtigt.

Des Weiteren sind auf dem Markt mobile Arbeitsmaschinen frei erhältlich mit Hub-Senkanwendungen, wie sie regelmäßig bei Teleskopladern, Gabelstaplern oder Hebebühnen vorkommen. Bei diesen Lösungen wird zum Senken einer Last häufig eine proportionale Stromregelung eingesetzt, die im geschlossenen Zustand wiederum leckagefrei abdichten soll, um dergestalt ein ungewolltes Absenken der Last zu verhindern.

Bei diesen bekannten Lösungen wird die proportionale Stromregelfunktion dabei regelmäßig durch ein Proportional-Drosselventil und eine Druckwaage realisiert. Dabei übernimmt die Druckwaage die Aufgabe, die Druckdifferenz mittels der Proportionaldrossel konstant zu halten. Unabhängig von schwankenden Last- oder Zylinderdrücken wird so ein konstanter Volumenstrom ausgeregelt. Um eine gute Regelqualität zu erreichen, "fühlt" dabei die Druckwaage idealerweise den Last- oder Zylinderdruck und regelt entsprechend auf der Ablaufseite des Proportionalventils.

Soll diese Ventilkonstellation nun leckagefrei abdichten, so schließt die Proportionaldrossel sitzdicht. Dennoch entsteht über den Lastabgriff der Druckwaage ein gewisser Leckagefluss. Um dies zu vermeiden, werden üblicherweise Dichtelemente, wie O-Ringe oder alternative Bewegungsdichtungen, eingesetzt, die jedoch zu Performance-Nachteilen führen, die in der praktischen Anwendung solcher Systeme üblicherweise nicht akzeptiert werden. Beim Schließen eines Ventilsitzes entstehen ohnehin Differenzflächen, nach einer gewissen Lebensdauer auch zusätzliche Anprägeflächen, die die Funktion der Druckwaage, insbesondere bei hohen Lastdrücken, nachteilig beeinflussen. Insbesondere bei kleineren mobilen Arbeitsmaschinen, wie Gabelstaplern, die die Last üblicherweise nur kurze Zeit auf einer vorgebbaren Position halten müssen, wird die dahingehende Leckage als technisch unvermeidlich eben einfach akzeptiert. Ferner ist vorgesehen, dass demgegenüber schwerere Hubarbeitsbühnen ihre Last auf zusätzlichen Sperrventilen abstützen können, die jedoch wieder fehlerbehaftet sind und von der Kostenseite her zu einem wesentlichen Mehraufwand führen.

Des Weiteren sind Lösungen im Stand der Technik bekannt, wie sie in der US 7,261,030 B2 aufgezeigt sind, die allerdings von einem anderen Schaltplankonzept ausgehen. Bei der dahingehend bekannten Lösung nach dem US-Schutzrecht fühlt die Druckwaage, nicht wie sonst üblich, die Last am jeweiligen Verbraucher und regelt entsprechend ein, sondern dem Proportionalventil wird ein Druckregelventil vorgesetzt, welches den Druck vor der Proportionaldrossel auf ein gewisses Niveau regelt. Dies führt zu einer sehr komplexen Bauweise des Ventils und zum anderen zu einer großen Strömungskraftabhängigkeit. Im Vergleich zu sonstigen Lösungen im Stand der Technik ergeben sich des Weiteren sehr hohe Durchflusswiderstände und eine verspätete Reaktion auf Lastdruckschwankungen, was insgesamt zu einem schlechteren Regelverhalten führt.

Die DE 37 05 170 C1 offenbart eine bekannte Ablaufdruckwaage.

Die EP 2 551 571 A1 und die EP 0 893 607 A1 beschreiben weitere Ablaufdruckwaagen.Ausgehend von diesem Stand der Technik liegt der Erfindung die Aufgabe zugrunde, die bekannten Ablaufdruckwaagen dahingehend weiter zu verbessern, dass die Druckwaage in einem geschlossenen Zustand in eine sitzdichte Stellung verfährt und somit einen Leckagestrom von der Lastseite zum Tank hin mit Sicherheit verhindert.

Der Erfindung liegt ferner die Aufgabe zugrunde, bekannte Hub-Senkvorrichtungen von ihrer Sicherheit her zu verbessern.

Eine dahingehende Aufgabe löst eine Ablaufdruckwaage mit den Merkmalen des Patentanspruches 1 in seiner Gesamtheit sowie eine Hub-Senkvorrichtung gemäß der Merkmalsausgestaltung des Patentanspruchs 7.

Erfindungsgemäß ist vorgesehen, dass mittels einer Druckausgleichseinrichtung der am Nutzanschluss anstehende Fluiddruck derart auf eine druckwirksame Fläche des Ventilkolbens geführt ist, dass dieser druckausgeglichen allein aufgrund der Kraft des Energiespeichers in seine jeweilige Öffnungs- oder Regelstellung gelangt.

Das erfindungsgemäße Ziel ist also der Erhalt einer sitzdichten Druckwaage. Da bei Lastdrücken größer der Federkraft (üblicherweise geringer 15 bar), der Regel- oder Ventilkolben bei vertikaler Ausrichtung der Druckwaage ganz nach unten gedrückt wird, kann man hier grundsätzlich einen Ventilsitz integrieren. Der Regel- oder Ventilkolben findet dann insoweit einen Anschlag und dichtet am Sitz leckagefrei ab. Es hat sich jedoch in der Praxis gezeigt, dass selbst geringste Anprägungen am Ventilsitz aufgrund der damit einhergehenden Differenzflächen Druckverhältnisse schaffen, die den Regel- oder Ventilkolben nicht mehr sicher öffnen lassen würden. Solche Anprägungen, die zu unterschiedlichen Sitz- und Dichtgeometrien führen, entstehen dadurch, dass der Ventilkolben der Druckwaage bei deren Betrieb ständig an den zugeordneten Sitzkomponenten im Ventilgehäuse anschlägt und die Ventilkomponenten in diesem Bereich plastisch verformt.

Da der Regel- oder Ventilkolben in der abdichtenden Position jedoch den Abfluss zum Rücklauf- oder Tankanschluss versperrt, kann erfindungsgemäß durch eine Druckausgleichseinrichtung, vorzugsweise in Form einer Bohrung, im Kolben nach dem Öffnen des Proportionalventils ein Druckausgleich hergestellt werden und das Ventil öffnet auch mit angeprägtem Sitz. Um zu verhindern, dass im Regelbetrieb eine größere Leckage eine Verfälschung des Lastdrucks verursachen kann, ist zusätzlich in die dahingehende Druckausgleichsbohrung oder den Druckausgleichskanal ein Rückschlagventil integriert. So wird nur ein Druck weitergegeben, wenn das Ventil sich "im Sitz" befindet und ein Ausgleich notwendig ist.

Gemäß der Erfindung ist also eine Ablaufdruckwaage geschaffen, die in einer vorgebbaren Endposition leckagefrei abdichtet und beispielsweise im Rahmen einer angeschlossenen Hub-Senkvorrichtung gemäß der Merkmalsausgestaltung des Patentanspruchs 10 einen Druckausgleich am Ventilsitz realisieren kann. Dies hat so keine Entsprechung im Stand der Technik.

Weitere vorteilhafte Ausführungsformen sind Gegenstand der Unteransprüche.

Im Folgenden wird die erfindungsgemäße Lösung anhand eines Ausführungsbeispiels nach der Zeichnung näher erläutert.

Dabei zeigen in prinzipieller und nicht maßstäblicher Darstellung die
- Fig. 1: in der Art eines hydraulischen Schaltplans wesentliche Teile einer Hub-Senkvorrichtung;
- Fig. 2: in der Art einer Längsschnittdarstellung die erfindungsgemäße Ablaufdruckwaage; und
- Fig. 3: einen vergrößerten Bildausschnitt, wie er in der Fig. 2 mit einem kastenförmigen, mit B bezeichneten Rahmen wiedergegeben ist.

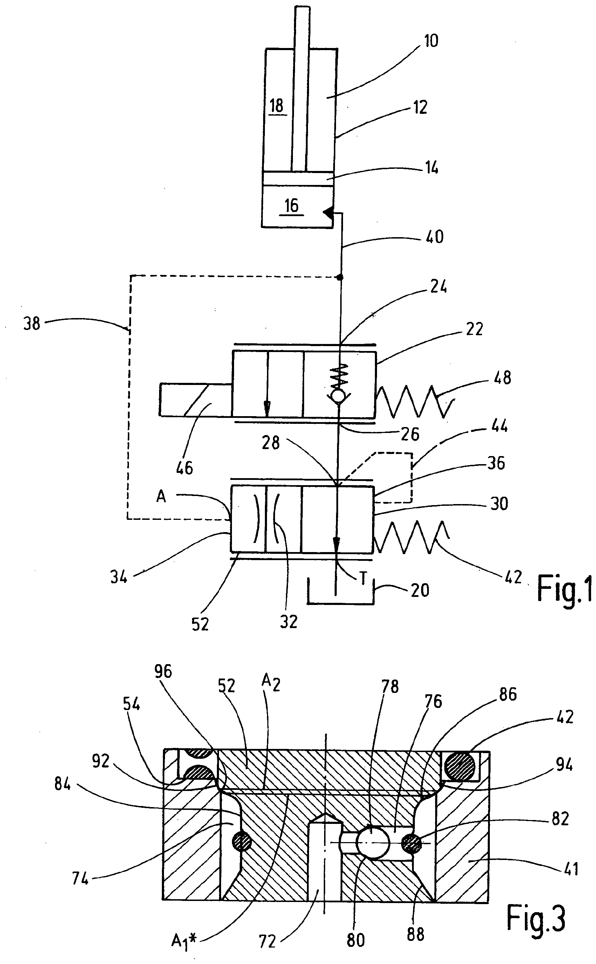

Die hydraulische Schaltplandarstellung nach der Fig. 1 zeigt einen hydraulischen Arbeitszylinder 10, wie er regelmäßig für Hub- und Senkanwendungen, beispielsweise bei Teleskopladern, Gabelstaplern oder Hebebühnen, Verwendung findet. Der Arbeitszylinder 10 weist eine in einem Gehäuse 12 längsverfahrbare Kolben-Stangeneinheit 14 auf, die den Arbeitszylinder 10 innerhalb des Gehäuses 12 in einen Kolbenraum 16 und einen Stangenraum 18 unterteilt. Zum Ausfahren der Kolben-Stangeneinheit 14 aus dem Gehäuse 12 des Arbeitszylinders 10, beispielsweise zum Anheben einer Last, dient eine ansteuerbare Motorpumpeneinheit, die Fluid unter Druck in den Kolbenraum 16 einströmen lässt. Dabei wird Fluid über den Stangenraum 18 verdrängt, das über eine geeignete Ablaufeinrichtung zu einem Vorratstank 20 geführt wird. Das dahingehende Ansteuern von Arbeitszylindern 10 für Hub-Senkanwendungen ist im Stand der Technik üblich, so dass an dieser Stelle hierauf nicht näher eingegangen wird.

Zum Absenken der Kolben-Stangeneinheit 14 im Gehäuse 12 dient unter anderem ein Proportional-Drosselventil 22, das mit seinem Eingang 24 an den Kolbenraum 16 des Arbeitszylinders 10 permanent fluidführend angeschlossen ist. Das dahingehende Proportional-Drosselventil 22 verfügt über eine verstellbare Messblende, was im Stand der Technik jedoch üblich ist. Der Ausgang 26 des Ventils 22 ist wiederum an den Eingang 28 einer Druckwaage 30 angeschlossen, die in üblicher Weise über eine Regelblende 32 verfügt und die auch als Ablaufdruckwaage bezeichnet wird, weil sie den Ablauf von Fluid aus dem Kolbenraum 16 des Arbeitszylinders 10 bei Absenken der Kolben-Stangeneinheit 14 regelt. Die Ablaufdruckwaage 30 weist zwei gegenüberliegende Steuerseiten 34, 36 auf, wobei in Blickrichtung auf die Fig. 1 gesehen die linke Steuerseite 34 über eine strichliniert wiedergegebene Steuerleitung 38 an eine Verbindungsleitung 40 zwischen Kolbenraum 16 und dem Eingang 24 des Proportional-Drosselventils 22 angeschlossen ist. Der Lastdruck des Arbeitszylinders 10 wird also über eine Anschlussstelle A im Ventilgehäuse 41 der Druckwaage 30 weitergeleitet, die auch mit Steueranschluss A bezeichnet ist. Auf der gegenüberliegenden rechten Steuerseite 36 greift eine Druckfeder 42 als Energiespeicher an sowie eine weitere Steuerleitung 44 (strichliniert wiedergegeben), die den am Eingang 28 der Ablaufdruckwaage 30 anstehenden Steuerdruck auf die rechte Steuerseite 36 weiterleitet. Der Ausgang der Druckwaage 30 bildet den Rücklauf- oder Tankanschluss T aus, der zum Vorratstank 20 führt.

Das in Fig. 1 mit seinem üblichen Schaltsymbol wiedergegebene Proportional-Drosselventil 22 ist über eine Steuereinrichtung 46 elektromagnetisch betätigbar und in seiner gezeigten sperrenden Ausgangslage über eine weitere Druckfeder 48 als Energiespeicher gehalten.

Insgesamt wird zum Senken einer Last mittels des Arbeitszylinders 10 eine proportionale Stromregelfunktion realisiert unter Einsatz des Proportional-Drosselventils 22 und der Ablaufdruckwaage 30. Dabei übernimmt die Druckwaage 30 die Aufgabe, die Druckdifferenz über die Proportionaldrossel konstant zu halten. Unabhängig von schwankenden Last- oder Zylinderdrücken wird so ein konstanter Volumenstrom ausgeregelt. Um eine gute Regelqualität zu erreichen, führt die Druckwaage 30 idealerweise den Last- oder Zylinderdruck bei betätigtem Proportional-Drosselventil 22 über die weitere Steuerleitung 44 auf die druckwirksame Fläche 36 des Regelkolbens.

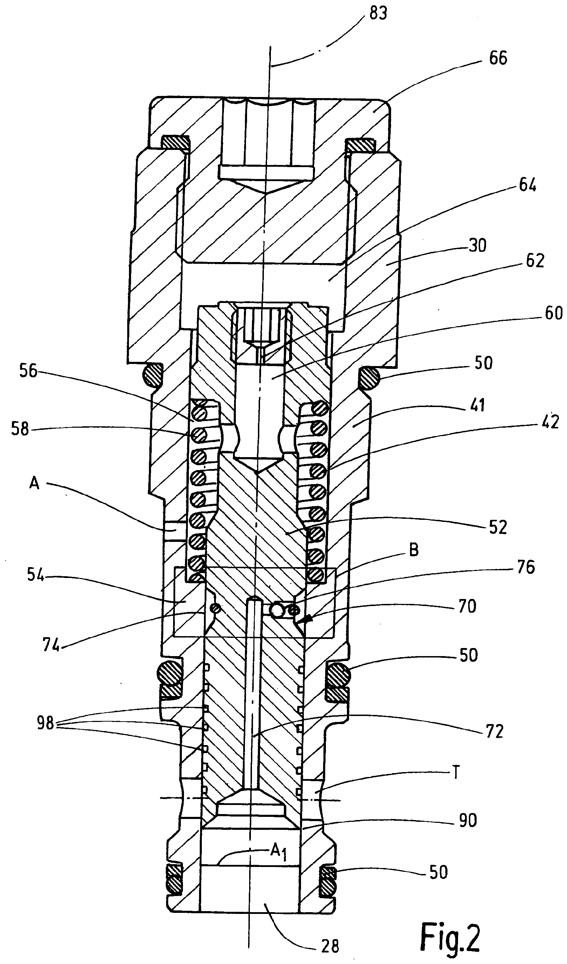

Die Fig. 1 zeigt nur prinzipiell den Aufbau einer Hub-Senkeinrichtung; selbstverständlich können mehrere Arbeitszylinder 10 für eine Hub-Senkanwendung zum Einsatz kommen mit Stromregelungen für jeweils einen Zylinder 10 oder mit einer gemeinsamen Stromregelung für mehrere Arbeitszylinder 10. Soll die vorgestellte Ventilkonstellation mit Proportionalventil 22 und Druckwaage 30 nun leckagefrei abdichten, um ein ungewolltes Absenken der Kolben-Stangeneinheit 14 im Gehäuse 12 des Arbeitszylinders 10 zu verhindern, so ist im Stand der Technik zwar vorgesehen, dass das Proportional-Drosselventil 22 sitzdicht abschließt. Über den angesprochenen Lastabgriff der Druckwaage entsteht aber dennoch ein gewisser Leckagefluss, der zum ungewollten Absenken der Kolben-Stangen-einheit 14 im Betrieb des Arbeitszylinders 10 bei Hub-Senkanwendungen führt. Hier soll die Erfindung abhelfen, was im Folgenden anhand der Ventilkonstruktion nach den Fig. 2 und 3 näher erläutert werden wird. Dabei werden die bisher eingeführten Bezugszeichen nebst zugehörigen Erläuterungen entsprechend verwendet, sofern dieselben Bauteile und Komponenten, wie vorstehend erläutert, angesprochen sind.

So zeigt die Fig. 2 als Ganzes die Ventilkonstruktion für die Ablaufdruckwaage 30. Das Ventilgehäuse 41 der Druckwaage ist gemäß der Darstellung nach der Fig. 2 gestuft ausgebildet, so dass die Druckwaage 30 als eine Art Einsatz- oder Cartridge-Ventil in zuordenbaren Ventilblöcken oder Ventilkomponenten (nicht dargestellt) einsetzbar ist. Zur Abdichtung gegenüber diesen Drittbau-Komponenten sind am Außenumfang des Ventilgehäuses 41 in entsprechend hierfür vorgesehenen Ausnehmungen Dichtringe respektive Dichtringpakete 50 eingesetzt. In Blickrichtung auf die Fig. 2 gesehen nach unten hin, ist stirnseitig in das Ventilgehäuse 41 eine zylindrische Ausnehmung in Form des Eingangs 28 der Druckwaage 30 eingebracht, der auch als Nutzanschluss 28 bezeichnet ist. Darüber angeordnet befindet sich der Tank- oder Rücklaufanschluss T, der aus mehreren zueinander diametral gegenüberliegenden Bohrungen in gleicher Höhe verlaufend besteht, die in radialer Richtung die Wand des Ventilgehäuses 41 durchgreifen. Wiederum darüberliegend befindet sich mindestens die eine (Steuer-)An schlussstelle A, die wiederum über eine Radialbohrung in das Ventilgehäuse 41 eingebracht ist. Gemäß der Darstellung nach der Fig. 1 steht also der Druck hinter dem Proportionalventil 22 auf dem Eingang 28 der Druckwaage 30 an. Der Rücklaufanschluss T führt zum Vorratstank 20, der regelmäßig Tank- oder Umgebungsdruck aufweist. Die Steuer-Anschlussstelle A ist wiederum über die Steuerleitung 38 und die Verbindungsleitung 40 an den Kolbenraum 16 des Arbeitszylinders 10 permanent fluidführend angeschlossen.

Innerhalb des Ventilgehäuses 41 ist längsverfahrbar ein Regel- oder Ventilkolben 52 geführt, der sich gemäß der Darstellung nach der Fig. 2 an der Druckfeder 42 als dem einen Energiespeicher abstützt, wobei die dahingehende Druckfeder 42 mit ihrem anderen unteren freien Ende sich an einer nach innen ragenden Stufe 54 im Ventilgehäuse 41 abstützt. Die Druckfeder 42 ist innerhalb des Ventilgehäuses 41 in einem Federraum 56 aufgenommen. Der dahingehende Federraum 56 ist dabei in jeder Verfahrstellung des Ventilkolbens 52 mit der Anschlussstelle A fluidführend verbunden sowie über eine Querverbindung 58 in Form von Radialbohrungen im Ventilkolben 52 mit einem Vorraum 60 am oberen Ende desselben, der wiederum über eine Dämpfungseinrichtung 62 in Form einer Blende oder Drossel in einen Dämpfungsraum 64 im Inneren des Ventilgehäuses 41 ausmündet. Der dahingehende Dämpfungsraum 64 ist nach oben hin von einem Abschlussteil 66 in dichtender Weise verschlossen, das in das Innere des Ventilgehäuses 41 an dieser Stelle einschraubbar ist. Die Dämpfungseinrichtung 62 ist als Einschraubteil in dem Ventilkolben 52 konzipiert, wobei das jeweilige Einschraubteil unterschiedliche Drossel- oder Blendendurchmesser aufweisen kann, so dass die beabsichtigte Ventildämpfung sich an eine Vielzahl solcher Ventilkonstruktionen für eine Ablaufdruckwaage 30 sinnfällig anpassen lässt.

Des Weiteren ist die erfindungsgemäße Druckwaage 30 mit einer als Ganzes mit 70 bezeichneten Druckausgleichseinrichtung versehen. Die dahingehende Druckausgleichseinrichtung 70 weist einen Druckausgleichskanal 72 auf, der am unteren Ende des Ventilkolbens 52 mittig geführt mit seinem einen freien, unteren Ende in Richtung der Anschlussstelle oder des Ventileingangs 28 und mit seinem anderen freien Ende in einen Ringkanal 74 ausmündet, der außenumfangsseitig in den Ventilkolben 52 eingebracht ist. Der Druckausgleichskanal 72 in Form der mittig angeordneten Längsbohrung im Ventilkolben 52 weist des Weiteren eine Querbohrung 76 als Querkanal auf, die als Teil des Kanals 72 wiederum in den angesprochenen Ringkanal 74 ausmündet. Dabei ist in den Querkanal respektive die Querbohrung 76 eine Ventilkugel 78 eingesetzt, die in der Art eines Rückschlagventils wirkt und bei einer Verfahrbewegung, in Blickrichtung auf die Fig. 2 und 3 gesehen, von links nach rechts einen Kanalquerschnitt in der Querbohrung 76 freigibt, so dass in der freigebenden oder Öffnungsstellung eine zunächst angedrosselte fluidführende Verbindung zwischen dem Druckausgleichskanal 72 und dem Ringkanal 74 hergestellt ist. Zu diesem Zweck ist die Querbohrung 76 außerhalb des Bereichs der Sitzanlage 80 der Ventilkugel 78 an dem Ventilkolben 52 im Durchmesser verbreitert, insbesondere mit einem größeren Durchmesser als die Ventilkugel 78 versehen. Damit die Ventilkugel 78 nicht ungewollt die Querbohrung 76 verlassen kann, ist deren Lage innerhalb der Querbohrung 76 über einen Haltering 82 gesichert, der aus einem metallischen Sicherungsring gebildet sein kann, der insoweit teilweise in einer entsprechenden Ausnehmung geführt den Ventilkolben 52 in der gezeigten Horizontalebene quer zur Längsrichtung oder Längsachse 83 des Ventils umfasst. Dieser Sicherungsring kann den austreibenden Druckkräften, welche auf die Kugel 78 einwirken, sicher entgegenwirken. Die dahingehenden Verhältnisse ergeben sich in verbesserter Darstellung aus der Fig. 3 wieder, die in vergrößerter Darstellung den mit B bezeichneten rechteckförmigen Ausschnitt in der Fig. 2 betrifft.

Wie sich insbesondere aus der Fig. 3 weiter ergibt, weist der Ringkanal 74, im gezeigten Querschnitt gesehen, einen geradlinig verlaufenden Nutgrund 84 auf, der parallel zur Längsachse 83 der Druckwaage 30 verläuft und in den die Querbohrung 76 ausmündet und an dem der Haltering 82 anliegt, und, ausgehend von diesem Nutgrund 84, weist der Ringkanal 74 an seinem oberen Ende einen konvexen Bahnverlauf 86 auf und an seinem gegenüberliegenden unteren Ende mündet dieser über eine Schräge 88 mit konstantem Schrägverlauf auf die Außenumfangsseite des Ventilkolbens 52 aus. Es hat sich gezeigt, dass der dahingehende Querschnittsverlauf für den Ringkanal 74 sich besonders eignet für die gewünschte Ansteuerung des Ventilkolbens 52, was im Folgenden noch näher erläutert werden wird.

In Blickrichtung auf die Fig. 2 gesehen, weist der Ventilkolben 52 an seinem unteren Ende eine zylindrisch umlaufende Steuerkante 90 auf, die der Fluidregelung zwischen den beiden Anschlüssen 28 und T dient, sobald die Druckwaage 30 in einer ihrer dahingehenden "geöffneten" Regelungsstellungen ist. Diese Steuerkante 90 bildet mit den zugehörigen Radialbohrungen am Anschluss T im Ventilkörper 30 die Regelblende aus. In der in der Fig. 2 gezeigten Stellung verschließt jedoch der Ventilkolben 52 mit seiner Unterseite den dahingehenden Rücklauf- oder Tankanschluss T. Ausgehend von der genannten Steuerkante 90 verjüngt sich nach innen hin der Ventilkolben 52 bis zu einer Übergangsstelle, wo der Druckausgleichskanal 72 in Richtung des Eingangs 28 der Druckwaage 30 austritt. Der Druckausgleichskanal 72 mit Querbohrung 76 und Ringkanal 74 bildet insoweit die weitere Steuerleitung 44 gemäß der Darstellung nach der Fig. 1 aus.

Wie sich des Weiteren insbesondere aus der Fig. 3 ergibt, ist unterhalb der Stufe 54 im Inneren des Ventilgehäuses 41 als Anlagefläche für das untere Ende der Druckfeder 42 zusätzlich eine schräg verlaufende Sitzfläche 92 im Ventilgehäuse 41 angeordnet. Anstelle einer Schräge für die Sitzfläche 92 kann diese in ihrer Form alle bekannten Ventilsitzgeometrien einnehmen, wie Kugelkalotte, Kegel etc. Die resultierende Flächendifferenz ergibt sich bei jeder Art der vorstehend beschriebenen Abdichtgeometrien, bei der anfänglich ein Linienkontakt zwischen beiden Komponenten entsteht. für die Bildung eines dicht schließenden, leckagefreien Ventilsitzes 94 weist darüber hinaus der Ventilkolben 52 an einer im Durchmesser verbreiterten Stelle eine korrespondierend schräg ausgebildete Anlagefläche 96 auf. Die Sitzfläche 42 aufseiten des Ventilgehäuses 41 ist dabei größer ausgebildet als die korrespondierend angeordnete schräge Anlagefläche 96 des Ventilkolbens 52, so dass dieser immer zwanglos eine Anschlagstellung mit dem Ventilgehäuse 41 erreicht ist. Im Betrieb des Ventils kommt es durch permanentes "Anschlagen" des Ventilkolbens 52 an das Ventilgehäuse 41 im Bereich des Ventilsitzes 94 zu Anprägungen an diesem Ventilsitz 94, die bei üblichen Druckwaagenkonstruktionen dazu führen würden, dass derart Druckverhältnisse am Ventilkolben 52 entstehen, dass dieser sich nicht mehr entgegen der Wirkung der Druckfeder 42 zwanglos öffnen lässt, was im Folgenden noch näher erläutert werden wird.

In den Fig. 2 und 3 ist der Ventilkolben 52 in seiner Schließstellung gezeigt, bei der das untere Ende des Kolbens 52 den Tank- oder Rücklaufanschluss T vollständig überdeckt. In der dahingehenden Schließstellung mündet der konvexe Bahnverlauf 86 des Ringkanals 74 in die geradlinig verlaufende Anlagefläche 96 am Ventilkolben 52 vor einer etwaigen Anprägung aus. Der Ventilsitz 94, insbesondere mit der über die Anlagefläche 96 vergrößerten Sitzfläche 92 am Ventilgehäuse 41, erlaubt, dass der Ventilkolben 52 nach einer Vielzahl von durchgeführten Regel- und Schließstellungen seinen jeweils eigenen "Passsitz" mit den damit einhergehenden Anprägungen an der Sitzfläche 92 am Ventilgehäuse 41 findet. Zwecks genauer Führung des Ventilkolbens 52 im Ventilgehäuse 41 ist dieser endseitig über entsprechend lange Führungsstrecken an der Innenwand des Ventilgehäuses außenumfangsseitig geführt. Insbesondere die im unteren Drittel des Ventilkolbens 52 eingebrachten Ringnuten 98 erlauben eine funktionssichere Abdichtung des mit Druckmedium beaufschlagten Ringkanals 74 gegenüber dem Druck am Nutzeingang 28 der Ablaufdruckwaage 30, der ausgangsseitig von dem Proportional-Drosselventil 22 bereitgestellt wird.

Anhand von druckwirksamen Flächen A₁, A₂ und A₁* soll nunmehr die Funktionsweise der erfindungsgemäßen Druckwaage 30 für das Durchführen eines Öffnungs- oder Regelvorgangs näher erläutert werden.

Die Fläche A₁ am Nutzeingang 28 der Druckwaage 30 (Fig. 2) ist durch die zylindrische Innenwand des Ventilgehäuses 41 im Bereich des Eingangs 28 begrenzt und die Fläche A₁ bildet den freien Durchflussquerschnitt für das einströmende Fluid am Eingang 28 der Druckwaage 30 aus. Die in Fig. 3 gezeigte Fläche A₂ ist durch den Durchmesser gebildet, der sich durch die angeprägte Ringanlagefläche ergibt, sobald der Ventilkolben 52 seinen individuell angeprägten Ventilsitz 94 einnimmt. Die in Fig. 3 darunterliegende Fläche A₁* ist wiederum durch den Querschnitt gebildet, der sich an der Übergangsstelle zwischen dem konvexen Bahnverlauf 86 des Ringkanals 74 und der Anlagefläche 96 am Ventilkolben 52 ergibt.

Wird die verstellbare Messblende respektive das Proportional-Drosselventil 22 geöffnet, um einen Volumenstrom in Richtung des Nutzeingangs 28 der Druckwaage 30 zu ermöglichen, so steht an den beiden Flächen A₁ und A₂ der gleiche Druck, nämlich p = p_{Last}, an, wobei der Lastdruck p_{Last} sich aus dem Druck im Kolbenraum 16 des jeweils an die beschriebene Ventilanordnung angeschlossenen Arbeitszylinders 10 ergibt. Insoweit wird der dahingehende Lastdruck p_{Last} im Kolbenraum 16 bei entsprechender Betätigung des Drosselventils 22 nicht nur an den Eingang 28 der Druckwaage 30 weitergegeben, sondern über die erste Steuerleitung 38 (Fig. 1) auch zum (Steuer-)Anschluss A weitergeleitet, der somit in entgegengesetzter Richtung wie der Druck am Eingang 28 auf den Ventilkolben 52 einwirkt. Durch das beschriebene Anprägen respektive die geometrische Ausführung des beschriebenen Ventilsitzes 94 ist dann die Fläche A₂ aus konstruktiver Sicht heraus stets größer als die Fläche A₁. Aus dieser Flächendifferenz folgt eine schließende Kraftkomponente, die ein Öffnen des Ventils in Form der Ablaufdruckwaage 30 entgegen der vergleichsweise geringen Federkraft der Druckfeder 42 verhindert, wobei die Federkraft der Druckfeder 42 selbstredend immer in Öffnungsrichtung des Ventilkolbens 52 wirkt, bei der dieser sich in Blickrichtung auf die Fig. 2 gesehen nach oben bewegt, um eine regelnde Fluidverbindung zwischen dem Nutzeingang 28 und dem Tank- oder Rücklaufanschluss T mittels der Steuerkante 90 zu ermöglichen.

Die Druckausgleichseinrichtung 70 mit ihrem Druckausgleichskanal 72 im Ventilkolben 52 ermöglicht nunmehr gleichzeitig eine Druckmeldung von p = p_{Last} auf die Fläche A₁*, die konstruktiv wiederum gleich der Fläche A₂ gewählt ist. Somit ist der Regel- oder Ventilkolben 52 dann druckausgeglichen und die Druckwaage 30 kann beim Öffnen des Drosselventils 22 allein durch die Federkraft des Energiespeichers respektive der Druckfeder 42 geöffnet werden. Das im Rahmen der Druckausgleichseinrichtung 70 vorgesehene Rückschlagventil mit Ventilkugel 78 verhindert dabei eine Leckage, ausgehend vom Anschluss A in Richtung des Eingangs-Anschlusses 28 in der Regelposition der Druckwaage 30. Hierbei ist der Druck im Ringkanal 74 stets höher als der anstehende Druck am Eingang 28, so dass das Rückschlagventil immer sitzdicht geschlossen gehalten werden kann.

Bezogen auf die Dämpfungseinrichtung 62 erfolgt die Dämpfung bzw. das Verdrängen des Mediums über einen hydraulischen Widerstand und zwar immer über die Kombination der Blende und des Ringspaltes, der zwischen Kolben und Ventilkörper entsteht. Daraus ergeben sich folgende Dämpfungslösungen: geschlossene Blende; der Medienfluss erfolgt ausschließlich über den Ringspalt oder bei variablem Blendendurchmesser ergibt sich ein Medienfluss über Blende und Ringspalt.

Mit der erfindungsgemäßen Lösung ist insoweit eine Ablaufdruckwaage 30 geschaffen, die in der in den Fig. 2 und 3 gezeigten Endposition leckagefrei am Ventilsitz 94 abdichtet und dennoch bei angehängter hydraulischer Last, beispielsweise gemäß dem Ausführungsbeispiel nach der Fig. 1, einen Druckausgleich, wie vorstehend beschrieben, am Ventilsitz 94 realisieren kann, um dergestalt die Regelfunktion der Ablaufdruckwaage 30 sicherstellen zu können. Dies hat so keine Entsprechung im Stand der Technik.

## Patentansprüche

1. Ablaufdruckwaage (30), bestehend aus mindestens einem Ventilgehäuse (41) mit mindestens drei Fluid-Anschlussstellen in Form eines Nutzanschlusses (28), eines Rücklaufanschlusses (T) und eines Steuer-anschlusses (A), in dem entgegen der Wirkung eines Energiespeichers (42) ein Ventilkolben (52) längsverfahrbar geführt, von einer jeweiligen Öffnungs- oder Regelstellung ausgehend, gegen einen Ventilsitz (94) in eine Schließstellung verfährt, bei der Nutz (28)-und Rücklaufanschluss (T) voneinander getrennt sind, wobei mittels einer Druckausgleichseinrichtung (70) der am Nutzanschluss (28) anstehende Fluiddruck derart auf eine druckwirksame Fläche (A₁*) des Ventilkolbens (52) geführt ist, dass dieser druckausgeglichen aufgrund der Kraft des Energiespeichers (42) in seine jeweilige Öffnungs- oder Regelstellung gelangt, **dadurch gekennzeichnet, dass** der Ventilsitz (94) mit einer schräg verlaufenden Sitzfläche (92) am Ventilgehäuse (41) einen sitzdichten leckagefreien Anschlag für den Ventilkolben (52) am Ventilgehäuse (41) ausbildet, der über eine korrespondierend schräg ausgebildete Anlagefläche (96) verfügt, dass die Druckausgleichseinrichtung (70) einen Druckausgleichskanal (72) aufweist, der im Ventilkolben (52) geführt mit seinem einen freien Ende in Richtung des Nutzanschlusses (28) im Ventilgehäuse (41) und mit seinem anderen freien Ende in einen Ringkanal (74) im Ventilkolben (52) ausmündet, und dass der Ringkanal (74) zumindest die druckwirksame Fläche (A₁*) aufweist, die gleich groß ist wie eine Anlagefläche (A₂) des Ventilkolbens (52) im Bereich des Ventilsitzes (94) und die durch mindestens einen Anprägevorgang durch die Bewegung des Ventilkolbens (52) sowie die geometrische Ausbildung des Ventilsitzes (94) regelmäßig größer ist als eine Steuerfläche (A₁) auf der freien Stirnseite des Ventilkolbens (52), die dem Nutzanschluss (28) zugewandt ist.

2. Ablaufdruckwaage nach einem der vorstehenden Ansprüche, **dadurch gekennzeichnet, dass** in der Anschlagstellung des Ventilkolbens (52) im Ventilgehäuse (41) der Ringkanal (74) zwischen dem Ventilsitz (94) und dem Rücklaufanschluss (T) angeordnet ist.

3. Ablaufdruckwaage nach einem der vorstehenden Ansprüche, **dadurch gekennzeichnet, dass** der Druckausgleichskanal (72) in Form mindestens einer mittig oder außermittig angeordneten Längsbohrung im Ventilkolben (52) geführt ist sowie in Form mindestens einer Querbohrung (76) zwischen dieser Längsbohrung und dem Ringkanal (74), und dass ein in Richtung des Ringkanals (74) öffnendes Rückschlagventil (78) in der jeweiligen Querbohrung (76) angeordnet ist.

4. Ablaufdruckwaage nach Anspruch 3, **dadurch gekennzeichnet, dass** der Ringkanal (74) im Querschnitt gesehen einen geradlinig verlaufenden Nutgrund (84) im Ventilkolben (52) aufweist, in den die Querbohrung (76) ausmündet, und dass, ausgehend von diesem Nutgrund (84), der Ringkanal (74) in Richtung des Ventilsitzes (94) mit einer konvexen Krümmung (86) versehen ist und in der anderen Richtung über eine Schräge (88) mit konstantem Schrägverlauf auf die Außenumfangsseite des Ventilkolbens (52) ausmündet.

5. Ablaufdruckwaage nach einem der vorstehenden Ansprüche, **dadurch gekennzeichnet, dass** der Ventilkolben (52) gegenüberliegend zu dem Druckausgleichskanal (72) mit einer Dämpfungseinrichtung (62) versehen ist mit einem Vorraum (60), der mittels einer Blende oder Drossel abgeschlossen ist, und der in einen Federraum (55) ausmündet mit einer Druckfeder (42) als dem Energiespeicher, in den der Steueranschluss (A) im Ventilgehäuse (41) ausmündet.

6. Ablaufdruckwaage nach Anspruch 5, **dadurch gekennzeichnet, dass** der Vorraum (60) im Ventilkolben (52) über die Blende oder Drossel der Dämpfungseinrichtung (62) in einen Dämpfungsraum (64) im Ventilgehäuse (41) ausmündet.

7. Hub-Senkvorrichtung, insbesondere für den Einsatz bei hydraulischen Arbeitszylindern (10), vorzugsweise bei Teleskopladern, Gabelstaplern oder Hebebühnen, bestehend aus mindestens einem Proportional-Drosselventil (22), das eine proportionale Stromregelfunktion ausübt, und einer davon ausgangsseitig angeschlossenen Ablaufdruckwaage (30) nach einem der vorstehenden Ansprüche.

## Claims

1. Discharge pressure compensating valve (30), consisting of at least one valve housing (41) with at least three fluid connection points in the form of a service port (28), a return port (T) and a control port (A), in which a valve piston (52), mounted such that it can be moved longitudinally against the action of an energy accumulator (42), moves towards a valve seat (94) from a respective opening or control position into a closing position, in which the service (28) and return port (T) are separated from one another, the fluid pressure present at the service port (28) being applied by means of a pressure compensating device (70) to a pressure-sensitive surface (Aᵢ*) of the valve piston (52) in such a way that said valve piston moves into its respective opening or control position in a pressure-compensated manner due to the force of the energy accumulator (42), **characterised in that** the valve seat (94), comprising a diagonally extending seat surface (92) on the valve housing (41), forms a seat-tight, leak-free stop for the valve piston (52) on the valve housing (41), said valve piston having a correspondingly diagonally shaped contact surface (96), **in that** the pressure compensating device (70) comprises a pressure compensating channel (72), which is mounted in the valve piston (52) with one free end leading in the direction of the service port (28) in the valve housing (41) and with its other free end leading into an annular channel (74) in the valve piston (52), and **in that** the annular channel (74) at least comprises the pressure-sensitive surface (Aᵢ*), which is the same size as a contact surface (A₂) on the valve piston (52) in the region of the valve seat (94) and which, due to at least one pressing operation caused by the motion of the valve piston (52) and the geometric shape of the valve seat (94), is consistently larger than a control surface (Aᵢ) on the free end face of the valve piston (52), said end face facing the service port (28).

2. Discharge pressure compensating valve according to any one of the preceding claims, **characterised in that**, in the stop position of the valve piston (52) in the valve housing (41), the annular channel (74) is arranged between the valve seat (94) and the return port (T).

3. Discharge pressure compensating valve according to any one of the preceding claims, **characterised in that** the pressure compensating channel (72) is guided in the form of at least one longitudinal hole arranged in the centre or off-centre in the valve piston and in the form of at least one transverse hole (76) between this longitudinal hole and the annular channel (74), and **in that** a non-return valve (78) opening in the direction of the annular channel (74) is arranged in the respective transverse hole (76).

4. Discharge pressure compensating valve according to claim 3, **characterised in that** the annular channel (74), when viewed in cross-section, comprises a groove bottom (84) running in a straight line in the valve piston (52), into which the transverse hole (76) leads, and **in that**, from this groove bottom (84), the annular channel (74) is provided with a convex curvature (86) in the direction of the valve seat (94) and with a diagonal incline (88) with a constant diagonal course in the other direction, leading onto the outer circumference of the valve piston (52).

5. Discharge pressure compensating valve according to any one of the preceding claims, **characterised in that** the valve piston (52) is furnished with a damping means (62) opposite the pressure compensating channel (72), with a preliminary chamber (60), which is closed by means of a diaphragm or throttle, and which leads into a spring chamber (55) with a compression spring (42) as the energy accumulator into which the control port (A) in the valve housing (41) leads.

6. Discharge pressure compensating valve according to claim 5, **characterised in that** the preliminary chamber (60) in the valve piston (52) leads into a damping chamber (64) in the valve housing (41) via the diaphragm or throttle of the damping means (62).

7. Lifting and lowering device, especially for use with hydraulic cylinders (10), preferably with telescopic handlers, fork-lift trucks or lifting platforms, consisting of at least one proportional throttle valve (22), which performs a proportional flow control function, and a discharge pressure compensating valve (30) according to any one of the preceding claims, which is connected on the outlet side thereof.

## Revendications

1. Balance (30) manométrique d'écoulement, constituée d'au moins un corps (41) de soupape ayant au moins trois points de raccordement de fluide sous la forme d'un raccord (28) utile, d'un raccord (T) de retour et d'un raccord (A) de commande, dans laquelle, à l'encontre de l'effet d'un accumulateur (42) d'énergie, un piston (52) de soupape est guidé de manière à pouvoir se déplacer longitudinalement, en se déplaçant à partir d'une position respective d'ouverture ou de réglage vers un siège (94) de soupape en une position de fermeture, dans laquelle le raccord (28) utile et le raccord (T) de retour sont séparés l'un de l'autre, dans laquelle, au moyen d'un dispositif (70) de compensation de la pression, la pression du fluide s'appliquant au raccord (28) utile est appliquée à une surface (A₁*) efficace du point de vue de la pression du piston (52) de la soupape, de manière à ce que celui-ci parvienne, d'une manière compensée en pression en raison de la force de l'accumulateur (42) d'énergie, dans sa position d'ouverture ou de réglage respective, **caractérisée en ce que** le siège (94) de la soupape constitue, par une surface (92) de siège s'étendant de manière inclinée sur le corps (41) de la soupape, une butée sans fuite à étanchéité de siège pour le piston (52) de la soupape sur le corps (41) de la soupape, qui dispose, par une surface (96) d'application, constituée de manière inclinée correspondante, **en ce que** le dispositif (70) de compensation de la pression a un conduit (72) de compensation de la pression, qui passe dans le piston (52) de la soupape et qui débouche, par l'une de ses extrémités libres, en direction du raccord (28) utile du corps (41) de la soupape et par son autre extrémité libre, dans un conduit (74) annulaire du piston (52) de la soupape, et **en ce que** le conduit (74) annulaire a au moins la surface (A₁*) efficace du point de vue de la pression, qui est aussi grande qu'une surface (A₂) d'application du piston (52) de la soupape dans la région du siège (94) de la soupape et qui, par au moins une opération d'estampage par le déplacement du piston (52) de la soupape, ainsi que par la constitution géométrique du siège (94) de la soupape, est, d'une manière régulière, plus grande qu'une surface (A1) de commande du côté frontal libre du piston (52) de la soupape, qui est tourné vers le raccord (28) utile.

2. Balance manométrique d'écoulement suivant l'une des revendications précédentes, **caractérisée en ce que**, dans la position de butée du piston (52) de la soupape dans le corps (41) de la soupape, le conduit (74) annulaire est disposé entre le siège (94) de la soupape et le raccord (T) de retour.

3. Balance manométrique d'écoulement suivant l'une des revendications précédentes, **caractérisée en ce que** le conduit (72) de compensation de la pression passe sous la forme d'au moins un trou longitudinal disposé au milieu ou hors du milieu dans le piston (52) de la soupape, ainsi que sous la forme d'au moins un trou (76) transversal entre ce trou longitudinal et le conduit (74) annulaire, et **en ce qu'**un clapet antiretour (78), s'ouvrant en direction du conduit (74) annulaire, est monté dans le trou (76) transversal respectif.

4. Balance manométrique d'écoulement suivant la revendication 3, **caractérisée en ce que** le conduit (74) annulaire a, considéré en section transversale, un fond (84) rainure s'étendant en ligne droite dans le piston (52) de la soupape, dans lequel le trou (76) transversal débouche et **en ce que**, à partir de ce fond (84) de rainure, le conduit (74) annulaire est pourvu, en direction du siège (94) de la soupape, d'une courbure (86) convexe, et dans l'autre direction, débouche par un biseau (88) à courbe d'inclinaison constante sur le côté de pourtour extérieur du piston (52) de la soupape.

5. Balance manométrique d'écoulement suivant l'une des revendications précédentes, **caractérisée en ce que** le piston (52) de la soupape est pourvu, en face du conduit (72) de compensation de la pression, d'un dispositif (62) d'amortissement ayant une antichambre (60), qui est fermée au moyen d'un diaphragme ou d'un étranglement, et qui débouche dans un espace (55) pour un ressort ayant un ressort (42) de compression comme accumulateur d'énergie, dans lequel le raccord (A) de commande débouche dans le corps (41) de la soupape.

6. Balance manométrique d'écoulement suivant la revendication 5, **caractérisée en ce que** l'antichambre (60), dans le piston (52) de la soupape, débouche, par l'intermédiaire du diaphragme ou de l'étranglement du dispositif (62) d'amortissement, dans un espace (64) d'amortissement du corps (41) de la soupape.

7. Installation de levage et d'abaissement à utiliser notamment dans des vérins (10) de travail hydraulique, de préférence dans des échelles télescopiques, des chariots à fourche ou des ponts levant, constitués d'au moins une soupape (22) à étranglement proportionnel, qui exerce une fonction de réglage de courant proportionnel et d'une balance (30) manométrique d'écoulement raccordée du côté de sa sortie suivant l'une des revendications précédentes.
